# EUROPEAN PATENT APPLICATION

(11) **EP 3 319 027 A1**
(43) Date of publication of application: **09.05.2018**
(21) Application number: 17199055.9
(22) Date of filing: 27.10.2017
(51) Int. Cl.: G06Q 10/08, G06Q 30/00

(54) **PLANOGRAM COMPLIANCE**

(30) Priority: 02.11.2016 US 201662416429 P; 25.08.2017 US 201715686890
(71) Applicant: Vocollect, Inc., Pittsburgh, PA 15235 (US)
(72) Inventor: HENDRICKSON, James, Morris Plains, NJ 07950 (US); PIKE, Lori, Morris Plains, NJ 07950 (US); OUDARD, Cedric, Morris Plains, NJ 07950 (US); DI SANTO, Giovanni, Morris Plains, NJ 07950 (US); VOLZ, Justin, Morris Plains, NJ 07950 (US)
(74) Representative: Houghton, Mark Phillip

(57) **Abstract**

A compliance method involves, for example, storing actual product placement data describing a display arrangement of actual product placements; at one or more programmed processors: comparing the actual product placement data with planned product placement as defined in a planogram; creating a set of one or more instructions for rearrangement of the actual product placement to bring the actual product placement in the display arrangement into compliance with the planned product placement as defined in the planogram; and outputting the set of instructions.

## Description

### CROSS-REFERENCE TO RELATED APPLICATION

The present application claims the benefit of U.S. Patent Application No. 62/416,429 for *Planogram Compliance* filed November 2, 2016, which is hereby incorporated by reference in its entirety.

### FIELD OF THE INVENTION

The present invention relates to auditing product displays and bringing the product displays into compliance with associated planograms.

### BACKGROUND

Generally speaking, retail product displays are often governed by a planogram. A planogram is a diagram or other representation of the planned placement of products on shelves. Retailers build displays that comply with predetermined planograms. These planograms allow stores to maintain consistent look and feel and permit the stores to employ environmental design concepts to maximize sales. In some cases, stores are contractually obligated to ensure that vendors have and maintain specific shelf space. If vendors are not provided the contractually obligated shelf space the store can be fined for non-compliance. Complying with a planogram can also be tied to maintaining inventory levels thus ensuring that customers are able to purchase products because they are in stock.

Maintaining the displays in compliance with the planograms often takes substantial effort. The current process calls for too much cognitive load in order for workers to relocate products to the correct location. As a result, the standard operating procedure is often for all products in a given planogram to be un-shelved and the display to be rebuilt when there is a significant discrepancy. Therefore, a need exists for a mechanism to enhance the efficiency of this process.

### SUMMARY

Accordingly, in one aspect, the present invention embraces various methods and apparatus for conducting an audit of a display for compliance with a planogram.

In an example embodiment, a method involves: auditing a display arrangement to generate actual product placement data representing actual product placement in the display arrangement; at one or more programmed processors: comparing the actual product placement data with planned product placement as defined in a planogram; creating a set of one or more instructions for rearrangement of the actual product placement to bring the actual product placement in the display arrangement into compliance with the planned product placement as defined in the planogram; and outputting the set of instructions.

In certain example embodiments, the set of instructions is output as synthesized speech instructions. In certain example embodiments, at least one of the instructions comprises an instruction to add product at a specified location in the display arrangement. In certain example embodiments, at least one of the instructions comprises an instruction to shift a product at a specified location in the display arrangement to the left or to the right. In certain example embodiments, at least one of the instructions comprises an instruction to remove a product at a specified location in the display arrangement. In certain example embodiments, the comparing involves a product check of the audit data to identify unknown or missing products. In certain example embodiments, the comparing involves a facings check that compares relative quantities of actual product facings with planned product facings. In certain example embodiments, the comparing involves a slot check that checks to see if products are shifted to the left or right of planned product placement.

Another example method involves: storing actual product placement data describing a display arrangement of actual product placements; at one or more programmed processors: comparing the actual product placement data with planned product placement as defined in a planogram; creating a set of one or more instructions for rearrangement of the actual product placement to bring the actual product placement in the display arrangement into compliance with the planned product placement as defined in the planogram; and outputting the set of instructions.

In certain example embodiments, the set of instructions are stored as ordered instructions in an instruction stack and where outputting the instruction stack involves outputting the instructions in a specified order. In certain example embodiments, the set of instructions is output as synthesized speech instructions. In certain example embodiments, at least one of the instructions involves an instruction to add product at a specified location in the display arrangement. In certain example embodiments, at least one of the instructions comprises an instruction to shift a product at a specified location in the display arrangement to the left or to the right. In certain example embodiments, at least one of the instructions involves an instruction to remove a product at a specified location in the display arrangement. In certain example embodiments, the comparing involves a product check of the audit data to identify unknown or missing products. In certain example embodiments, the comparing involves a facings check that compares relative quantities of actual product facings with planned product facings. In certain example embodiments, the comparing involves a slot check that checks to see if products are shifted to the left or right of planned product placement.

Another example method involves: storing actual product placement data describing a display arrangement of actual product placements; at one or more programmed processors: comparing the actual product placement data with planned product placement as defined in a planogram; creating a set of one or more instructions for rearrangement of the actual product placement to bring the actual product placement in the display arrangement into compliance with the planned product placement as defined in the planogram; where the instructions comprise one or more of the following: an instruction to add product at a specified location in the display arrangement, an instruction to shift a product at a specified location in the display arrangement to the left or to the right, and an instruction to remove a product at a specified location in the display arrangement; and outputting the set of instructions.

In certain example embodiments, the set of instructions is output as synthesized speech instructions. In certain example embodiments, the comparing involves: a product check of the audit data to identify unknown or missing products; a facings check that compares relative quantities of actual product facings with planned product facings; and a slot check that checks to see if products are shifted to the left or right of planned product placement.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 depicts a reference display arrangement used for the examples processes discussed.
Figure 2 is an example of a flow chart of an example compliance process consistent with certain embodiments.
Figure 3 is an example of a flow chart depicting a product check process consistent with certain embodiments.
Figure 4 is an example of a flow chart depicting a facing check process consistent with certain embodiments.

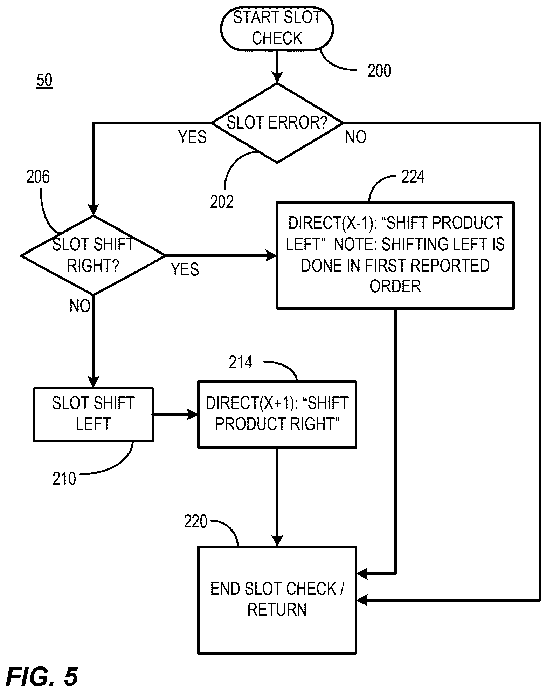

Figure 5 is an example of a flow chart depicting a slot check process consistent with certain embodiments.
Figure 6 is an example of a system for carrying out the processes described in the flow charts.

### DETAILED DESCRIPTION

This document describes a system and method for conducting a voice directed planogram logic audit. The system is provided with possible(available) and actual facings/empties related to a product in addition to its relative order on the shelf, during an audit, and is stored as the actual/recorded planogram data in the system. The product related facings can be input either by voice, keypad, or scan. Further, the system compares the possible and actuals with the relative order to the applicable planogram from the customer. A corresponding compliance task to fix the planogram items out of compliance is created from the identified comparison. An output of the system provides a directed assignment to a user/assessor to shift or move the products in order to correct errors in product placement. The system and process are sometimes referred to as a "detect and direct" compliance system and process herein.

For purposes of this document, the term 'planogram' means a diagram or other representation (e.g., a matrix, a table or chart) of the planned (and thus the expected) placement of products on display shelves.

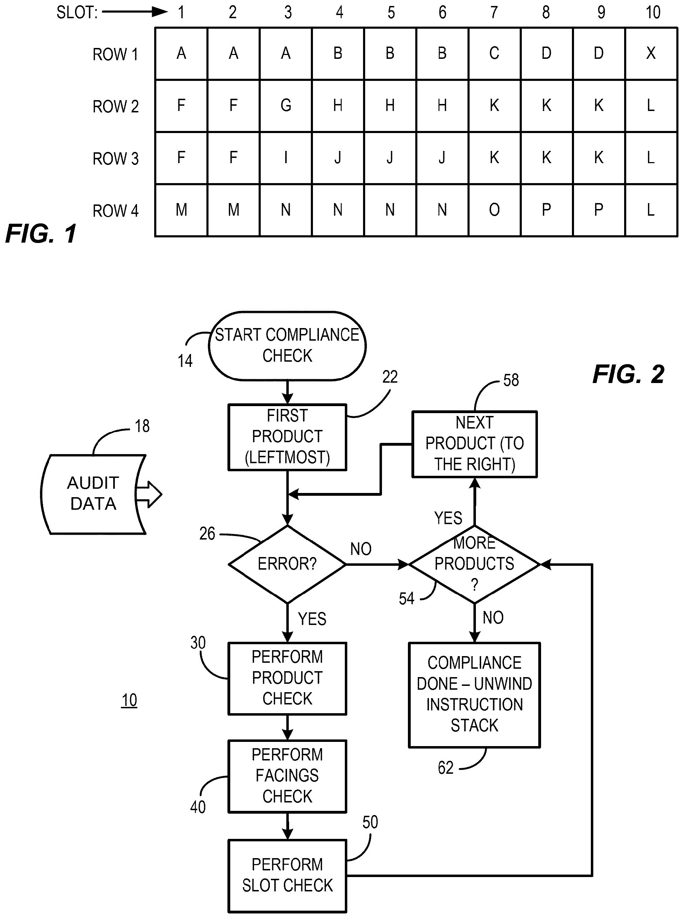

Referring to Figure 1, an example planogram is depicted as an array of slots (1-10) arranged in four rows of shelves (row 1 through row 4). Products are represented by letters for ease of representation (A through P). A single row (row 1) is used as an example throughout this document. The term 'facing' is used to mean a product at the front of a slot on a shelf. So, if a product 'A' occupies three slots (1, 2 and 3) of row 1, then product A has three 'facings', without regard for how many products might be in the slot behind the product at the front of the shelf (where it "faces" the consumer).

The present "Detect and Direct" Compliance System creates an instruction stack, based on iterating thru the errors found in the audit. The system creates "directions" as it traverses the errors. Once it has addressed all the errors, assignments are created and are primarily performed in a "first-in-last-out" stack manner (The exception to this is upon a "slot shift right". In this case, the assignment will follow a "last-in-first-out" stack manner as will be discussed later.) In certain embodiments, the system utilizes speech synthesis and voice recognition to first issue instructions (one by one) to a worker from the instruction stack in the form of synthesized speech instructions. The worker may acknowledge completion of the instruction using speech or other input to the system. The worker may also interact with the system using speech to, for example, request the instruction be repeated, etc.

This system and process allows for the collection of planogram store data via voice, scanning/imaging, RFID, or other data collection method and then to process the data to determine differences from what is expected and then to automatically generate a task list that directs the worker via synthesized speech to fix the errors identified.

The process described herein aids in simplifying correction of a display for the worker and improves efficiency and time to compliance with the planograms. It also separates the process into two separate processes (audit followed by directed correction of the display) rather than allowing the worker to attempt to fix the problem while also auditing. The automated identification and assignment issuance removes the need for complete shelf rebuilding thus saving significant time and allowing more planogram throughput and compliance at greater accuracy.

To carry out the overall process, an audit process is carried out in which a worker captures a representation of the product facings that are actually on display. There is an associated planogram that defines the expected or planned placement of the product. A matrix is created with the collected data on the actual product placement and the audit data are put into the same format as the planogram so as to simplify conducting a one-to-one comparison of each slot in the audit data with the expected data from the planogram. In the present example implementation, both the planogram and the audit data are in matrices so that the audit data can be readily compared to the expected data in the matrix corresponding to the planogram. When the comparison is made, a set of system directed tasks is generated to correct any identified differences between the audit data and the planogram. These tasks may be provided to the worker by speech commands to effect rearrangement of the display to be in compliance with the planogram.

In the discussion that follows, the variable "X" is used as a symbol for the instruction number (i.e., a counter) for instructions that are placed in an instruction stack. As discussed below, a stack of instructions is built (e.g., from number 0 to 10). When the instruction stack is unwound to produce the series of instructions for use by the worker, the instructions are ordered from highest to lowest number (e.g., from 10 down to 0). Thus, x+1 is an incrementing of the instruction number in the stack. Similarly, x-1 indicates that an instruction is being injected below the current number.

Referring now to Figure 2, a compliance checking process consistent with the present teachings is depicted as process 10 starting at 14. This process is invoked after the audit process, which as described above, collects data that describe actual product placement in a display and places that data into the same format (e.g., a matrix) used to represent the planogram for the display in question. This audit process produces audit data 18 that is available to process 10 and processes invoked by process 10. Process 10 describes operation of a single row of product such as row 1 as described previously, but those skilled in the art will appreciate upon consideration of the present teachings that the process can be iterated for each of multiple rows of a display.

The audit creates an audit data record for each product that will contain the Row/Shelf (vertical index), relative order of product on Row/Shelf (horizontal index), its possible facings (available slots), and its actual facings (slots that contain product). The available (possible) facings are used to determine the relative position index of each product on the shelf. For example, the first product can have position 0. If this product has 5 possible facings, the next product has a relative position of 5 on the row/shelf. The available (possible) facings are also used to identify a gap (empty) when this number is greater than the actual facings.

All of this data is used as described above to construct a matrix. The system compares this matrix to the expected matrix constructed from the expected row, order, position, and facings from the planogram. The process described herein compares the indices to identify the following scenarios: too many facings, too few facings, product shifted left, product shifted right, wrong product, and misplaced product.

Example: Indices [Row, Relative Position from Left End, Possible Facing, Actual Facing] in which the relative position is found by adding the previous product's "possible facings". For the expected matrix, the possible and actual should be the same number (if no empty slots in the expected planogram).

Expected from Planogram [Row 3, Position or Slot 7, Possible 1, Actual 1]

Recorded in Workflow [Row 3, Position or Slot 6, Possible 2, Actual 1]

Process determines: Product was shifted one position to the left.

A new system directed task is generated to correct any identified error in compliance with the planogram. In this case, the task will include moving this product one slot to the right. This task can then be conveyed to the user via displayed or speech directions.

The process 10 of Figure 2 begins with a first product in a row. In keeping with a left to right processing convention, the process starts at 22 with selection of the leftmost process, but a right-to-left, or up-down convention could equivalently be adopted without departing from the present teachings. At this point, a comparison is made at 26 between the audit data for the first product and its corresponding planogram data to determine if there is an error (a missing product or the wrong product).

If an error is found at 26, the process proceeds to 30, where a product check is performed to find an unknown or missing product, as will be described in greater detail later. The product check at 30 is followed by a facings check 40 that checks available vs. actual slots (quantities) to determine if there a gap. This process 40 is also described later, but in general the process makes a comparison of the quantities of actual facings with the quantity of available slots (not actual quantity of products).

After the facing check 40, a slot check 50 is carried out to determine if products should be shifted left or right. This process 50 will also be discussed in greater detail later.

During the product check 30, the facing check 40 and the slot check 50, the instruction stack is created. This stack represents a set of stored instructions that can be generated to provide a worker with a set of step-by-step instructions for manipulation of the display to bring it into compliance with the planogram - usually without need to remove all products and rebuild the display. This is referred to herein as "unwinding" the instruction stack. That is, an information stack is first built. When all instructions are on the stack (all products have been processed), the stack is executed using "first-in-last-out" stack execution.

When the slot check 50 is completed, the process moves to 54 where a determination is made as to whether or not there are further products to process (after the leftmost product in the first iteration). If so, the product under examination is incremented to the right at 58 and the process returns to 26 for another round of processing.

The process 10 iterates like this until all of the products in the row being examined are processed. At this point, the conclusion at 54 is that there are no more products and the process proceeds to 62 where the compliance check is complete. At this point, the instruction stack can be "unwound" to provide output to the user of an ordered sequence of instructions that can be followed to correct any errors in the actual display and bring the display into compliance with the planogram. This can be done using speech synthesis to generate a sequence of verbal commands for the worker, or the instructions can be displayed on a display or printed out without limitation.

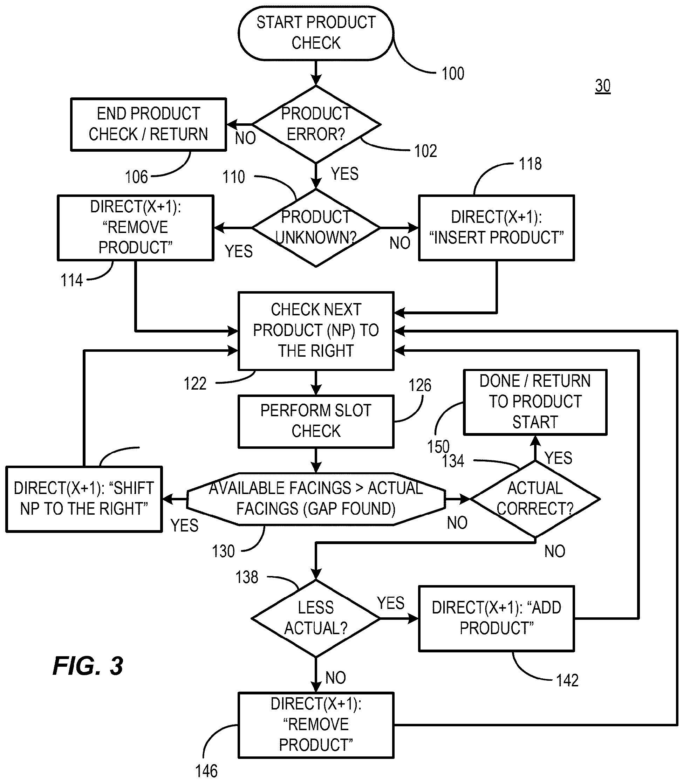

The product check 30 as mentioned above is depicted in greater detail in Figure 3 starting at 100, after which a determination is made as to whether or not there is a product error in the current position at 102. In the case where there is no error, the process is completed at 106 and the process returns. But, if there is a product error at the current slot, the process proceeds to 110 where the process determines if the product is unknown. If the product is unknown at 110, the process generates an instruction at 114 for the instruction stack at the next position (x+1) in the stack which directs the worker to "remove the product" at the current slot location. If the product is not unknown at 110, the process generates an instruction for the instruction stack at (x+1) for the user to "insert product" at 118. An error for the product is either "unknown" or "not found" (i.e. missing). So if you receive a product error and it is not "unknown", it is the "not found" or missing. Hence, the worker is directed to insert the missing product.

In either case of 114 or 118, the process proceeds to the next product (NP) on the right at 122 and calls the slot check process (to be discussed later) at 126. At 130, the process determines if the number of available facings (possible facings) is greater than the number of actual facings (indicating that a gap has been found). If so, the process proceeds to 134 where an instruction is generated for position (x+1) to "shift next product to the right" after which the process returns to 122. But if the number of available facings is not greater than the number of actual facings at 130, the process determines if the actual is correct at 134 and if not, the process proceeds to 138 to determine if there are less actual facings than available facings. If so at 142, the process generates an instruction at (x+1) to "add product" and the instruction is place on the instruction stack. If not at 146 the process generates an instruction for the instruction stack at (x+1) to "remove product". In either case, the process proceeds to 122 from either 142 or 146.

This process continues until the actual is correct at 134 at which point the process is done at 150 and returns to the product start.

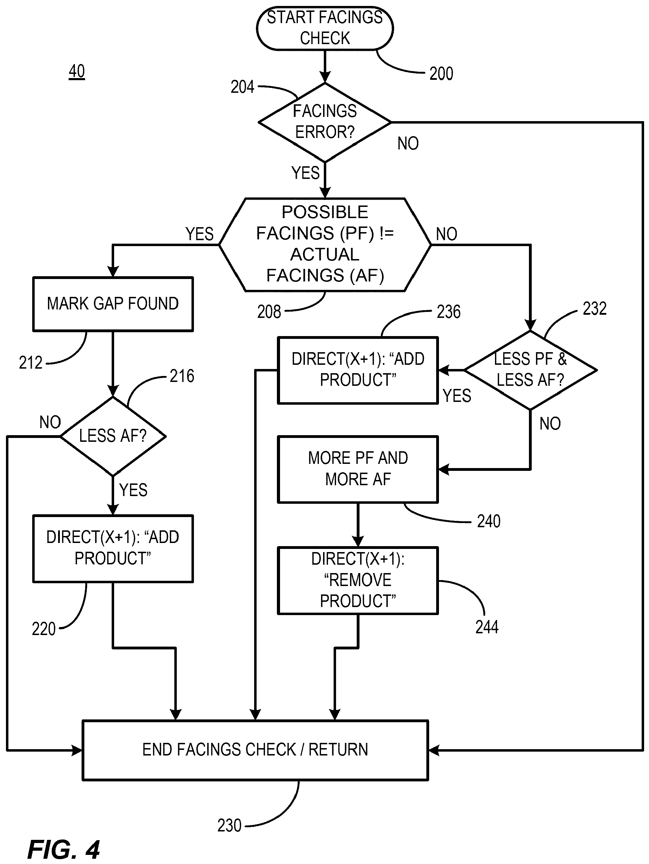

Figure 4 depicts the facings check process 40 starting at 200. As noted earlier, facings check 40 checks the number of available slots as compared to the number of actual slots to determine if a gap in product facings exists. At 204, the process determines if a facing error has occurred. If so, the process proceeds to 208 where the number of available (possible) facings is not equal to the number of actual facings. If they are not equal, the process knows at 212 that a gap is found and it is noted or marked. If there are less actual facings at 216, the process creates an instruction at x+1 to "add product". The facings check process then ends at 230 and returns. If at 216 there are not less actual facings, the process proceeds directly to 230.

If no facings error was determined at 204, the process proceeds directly to 230. But if a facings error is determined at 204 and the number of possible facings (PF) does equal the number of actual facings (AF) at 208, then the process checks at 232 whether there are less possible facings and less actual facings. If so, then the process proceeds to 236 where an instruction is generated at x+1 to "add product" and then the process proceeds to 230. If there are not less possible facings and less actual facings at 232, the process concludes that there are more possible facings and more actual facings. The process then creates an instruction at x+1 to "remove product" and the process proceeds to 230 and returns.

The slot check process 50 is depicted in flow chart 50 starting at 400 after which the process determines if there is a slot error at 202, and if so, then at 206 the process determines if there is a slot shift to the right. If not, then the slot shift is concluded to be left at 210. At 214 an instruction is generated at x+1 to "shift product right". The slot check process then ends at 220 and returns. If the slot shift is right at 206, the process proceeds to 224 where an instruction is created and inserted at x-1 to "shift product left". The process then returns at 220. In the event there is no slot error at 202, the process proceeds directly to 220 to end the slot check process and return.

As discussed in connection with Figure 2, the process creates an ordered stack of instructions that are used to correct errors in the product display and bring the display into compliance with the planogram. When the process is complete, the instruction stack is unwound and presented to a worker to make the adjustments as detailed in the instruction.

It seems to me that the actual instructions have to be

Also as discussed in connection with Figure 2, the process 10 (and 30, 40 and 50) utilizes audit data 18 to carry out the processes described. During the audit process, the system characterizes the actual product facings in a physical display so they can be compared with the planogram for the particular display. The definition of the errors found in the audit, i.e. during the collection of the actual planogram data is as follows including a high level description of the decision tree in the audit logic and the corresponding error identified. These terms are used in the error tables of the examples provided later in this document:

### AUDIT PROCESS LOGIC

Mark each expected product as "Not Found", and mark each recorded product as "Extra Product"

For each recorded product, check each expected product

```
   If the recorded product matches the expected product
   Mark the expected product and the recorded
 product as "Found"
   If the recorded product's slot index is less
 than the expected product's
   Mark the recorded product as "Shifted
 Left"
   Else if the recorded product's slot index is
 greater than the expected product's
   Mark the recorded product as "Shifted
 Right"
   If the recorded product's possible facings is
 less than the expected product's
   Mark the recorded product as "Less
 Possible Facings"
    Else if the recorded product's possible facings
 is greater than the expected product's
    Mark the recorded product as "More
 Possible Facings"
   If the recorded product's actual facings is
 less than the expected product's
   Mark the recorded product as "Less Actual
 Facings"
    Else if the recorded product's actual facings
 is greater than the expected product's
    Mark the recorded product as "More Actual
 Facings"
```

### COMPLIANCE PROCESS EXAMPLES

The present system creates an instruction stack as discussed above, based on iterating thru the errors found in the audit. Thus, the system creates a set of "directions" as it traverses the errors. Once it has addressed all the errors, assignments are created and are primarily performed in a "first-in-last-out" stack manner. The exception to this is upon a "slot shift right". In this case, the assignment will be performed in a "last-in-first-out" stack manner. Below there are 11 example scenarios depicted. Audit Output data tables developed from the logic above. Using the Audit output data as input to the flow charts above, the logic behind the compliance system is not only illustrated, but the corresponding results are achieved/verified.

The expected configuration is the "expected" data for a display from the Planogram. For example:

| 1 | 2 | 3 | 4 | 5 | 6 | 7 | 8 | 9 | 10 |
|---|---|---|---|---|---|---|---|---|---|
| A | A | A | B | B | B | C | D | D | - |

This is encoded as:

| Product | Row | Relative Order | Slot Index | Possible Facings | Actual Facings | Error |
|---|---|---|---|---|---|---|
| A | 1 | 1 | 1 | 3 | 3 | - |
| B | 1 | 2 | 4 | 3 | 3 | - |
| C | 1 | 3 | 7 | 1 | 1 | - |
| D | 1 | 8 | 8 | 2 | 2 | - |

### EXAMPLE 1

The system can detect when all the products are in the correct position.

| 1 | 2 | 3 | 4 | 5 | 6 | 7 | 8 | 9 | 10 |
|---|---|---|---|---|---|---|---|---|---|
| A | A | A | B | B | B | C | D | D | X |

Where x means "don't care".

Audit Output:

| | | Errors |
|---|---|---|
| A | [Found] | None |
| B | [Found] | None |
| C | [Found] | None |
| D | [Found] | None |

### EXAMPLE 2

The system can also detect when a product has less actual facings.

| 1 | 2 | 3 | 4 | 5 | 6 | 7 | 8 | 9 | 10 |
|---|---|---|---|---|---|---|---|---|---|
| A | A | A | B | B | - | C | D | D | X |

Audit process annotates:

| | | Errors |
|---|---|---|
| A | [Found] | None |
| B | [Found] | [Less Actual Facings] |
| C | [Found] | None |
| D | [Found] | None |

Compliance process detects:
Product A => [No Product Error][No Shift Error][No Facings Error]
Product B => [No Product Error][No Shift Error][ Facings Error]
[Possible Facings > Actual Facings of Product B][Less Actual Facings] [Add Product B in gap]
[Check Product to the Right]
[No Product Error] [No Shift Error][No Facings Error][No Action for Product C]
{No Remaining Errors}

Compliance process directs:
Locate Product B (e.g., identified by UPC code). Add Product B in empty slot.

### EXAMPLE 3

The system can detect when multiple products have less actual facings.

| 1 | 2 | 3 | 4 | 5 | 6 | 7 | 8 | 9 | 10 |
|---|---|---|---|---|---|---|---|---|---|
| A | A | A | B | B | - | C | D | - | X |

| | | Errors |
|---|---|---|
| A | [Found] | None |
| B | [Found] | [Less Actual Facings] |
| C | [Found] | None |
| D | [Found] | [Less Actual Facings] |

Compliance process detects:
Product A => [No Product Error][No Shift Error][No Facings Error]
Product B => [No Product Error][No Shift Error][ Facings Error]
[Possible Facings > Actual Facings of Product B][Less Facings] [Add Product B in gap]
[Check Product to the Right]
[No Product Error] [No Shift Error][No Facings Error][No Action for Product C]
Product D => [No Product Error][No Shift Error][ Facings Error]
[Possible Facings > Actual Facings of Product D][Less Actual Facings] [Add Product D in gap]
{No Remaining Errors}

Compliance process directs:
Locate Product B (UPC). Add Product B in empty slot.
Locate Product D (UPC). Add Product D in empty slot.

### EXAMPLE 4

The system can detect when a product has less actual facings, and its neighboring product has shifted left.

| 1 | 2 | 3 | 4 | 5 | 6 | 7 | 8 | 9 | 10 |
|---|---|---|---|---|---|---|---|---|---|
| A | A | A | B | B | C | - | D | D | X |

| | | Errors |
|---|---|---|
| A | [Found] | None |
| B | [Found] | [Less Possible Facings][Less Actual Facings] |
| C | [Found] | [Slot Shift Left][More Possible Facings] |
| D | [Found] | None |

Compliance process detects:
Product A => [No Product Error][No Shift Error][No Facings Error]
Product B => [No Product Error][No Shift Error][Facings Error]
[Less Possible Facings == Less Actual Facings of Product B] [Add Product B]
[Check Product to the Right]
[Slot Shift Left][Shift Product C right] [More Possible Facings]
[Check Product to the Right]
Product D => [No Product Error][No Shift Error][No Facings Error]
{No Remaining Errors}

Compliance process directs:
Locate Product C (UPC). Shift Product C right to be adjacent to Product D.
Locate Product B (UPC). Add Product B in empty slot.

### EXAMPLE 5

The system can detect when a product has less actual facings, and all of its neighboring products have shifted left.

| 1 | 2 | 3 | 4 | 5 | 6 | 7 | 8 | 9 | 10 |
|---|---|---|---|---|---|---|---|---|---|
| A | A | A | B | B | C | D | D | - | X |

| | | Errors |
|---|---|---|
| A | [Found] | None |
| B | [Found] | [Less Possible Facings][Less Actual Facings] |
| C | [Found] | [Slot Shift Left] |
| D | [Found] | [More Possible Facings][Slot Shift Left] |

Compliance process detects:
Product A => [No Product Error][No Shift Error][No Facings Error]
Product B => [No Product Error][No Shift Error][Facings Error]
[Less Possible Facings == Less Actual Facings of Product B] [Add Product B]
[Check Product to the Right]
[Slot Shift Left] [Shift Product right C] [More Possible Facings - NO]
[Check Product to the Right]
Product D => [No Product Error][Shift Error][Facings Error]
[Slot Shift Left] [Shift Product D right*] [More Possible Facings]
[Check Product to the Right] (last product)
{No Remaining Errors}

Compliance process directs:
Locate Product D (UPC). Shift Product D right to the end of the shelf.
Locate Product C (UPC). Shift Product C right to be adjacent to Product D.
Locate Product B (UPC). Add Product B in empty slot.

### EXAMPLE 6

The system can detect when a product has less actual facings, and its neighboring product has shifted right.

| 1 | 2 | 3 | 4 | 5 | 6 | 7 | 8 | 9 | 10 |
|---|---|---|---|---|---|---|---|---|---|
| A | A | A | B | B | B | - | C | D | X |

| | | Errors |
|---|---|---|
| A | [Found] | None |
| B | [Found] | [More Possible Facings] |
| C | [Found] | [Slot Shift Right] |
| D | [Found] | [Less Possible Facings][Less Actual Facings][Slot Shift Right] |

Compliance process detects:
Product A => [No Product Error][No Shift Error][No Facings Error]
Product B => [No Product Error][No Shift Error][Facings Error]
[Possible Facings != Actual Facings of Product B] Actual Correct[More Possible Facings Error] [There is a gap]
[Check Product to the Right]
Product C => [No Product Error][Shift Error][No Facings Error]
[Slot Shift Right] [Shift Product C left] [Actual Facings Error - NO]
Check Product to the Right]
Product D => [No Product Error][Shift Error][Facings Error]
[Less Possible Facings == Less Actual Facings of Product D][Slot Shift Right][Shift Product D left][Add Product D in empty slot.
{No Remaining Errors}

Compliance process directs:
Locate Product C (UPC). Shift Product C left.
Locate Product D (UPC). Shift Product D left to be adjacent to Product C.
Locate Product D (UPC). Add Product D in empty slot.

### EXAMPLE 7

The system can detect when a product is missing.

| 1 | 2 | 3 | 4 | 5 | 6 | 7 | 8 | 9 | 10 |
|---|---|---|---|---|---|---|---|---|---|
| - | - | - | B | B | B | C | D | D | X |

| | | Errors |
|---|---|---|
| A | [Not Found] | None |
| B | [Found] | [More Possible Facings] |
| C | [Found] | None |
| D | [Found] | None |

Compliance process detects:
Product A => [Product Error][No Shift Error][No Facings Error]
[Product Not Found]
[Check Product to the Right]
Product B => [No Product Error][No Shift Error][Facings Error]
[Possible Facings != Actual Facings]Actual Correct [More Possible Facings] [Product B includes a gap, shift right]
[Check Product to the Right]
Product C => [No Product Error][No Shift Error][No Facings Error]
[Add Product A] [Create new matrix with A added, adjust parameters, and recheck]
{No Remaining Errors}

| 1 | 2 | 3 | 4 | 5 | 6 | 7 | 8 | 9 | 10 |
|---|---|---|---|---|---|---|---|---|---|
| A | A | A | B | B | B | C | D | D | X |

| | | Errors |
|---|---|---|
| A | [Not Found] | None |
| B | [Found] | None |
| C | [Found] | None |
| D | [Found] | None |

Compliance process directs:
Locate Product B (UPC). Shift Product B right to be adjacent to Product C.
Locate Product A (UPC). Add Product A in empty slot.

### EXAMPLE 8

The system can detect when a product is missing, and its neighboring product is shifted left.

| 1 | 2 | 3 | 4 | 5 | 6 | 7 | 8 | 9 | 10 |
|---|---|---|---|---|---|---|---|---|---|
| - | - | B | B | B | C | D | D | X | X |

| | | Errors |
|---|---|---|
| A | [Not Found] | None |
| B | [Found] | [More Possible Facings] |
| C | [Found] | [Slot Shift Left] |
| D | [Found] | [Slot Shift Left] |

Compliance process detects:
Product A => [Product Error][No Shift Error][No Facings Error]
[Product Not Found]
[Check Product to the Right]
Product B => [No Product Error][No Shift Error][Facings Error]
[Possible Facings != Actual Facings]Actual Correct [More Possible Facings] [Product B includes a gap, shift right]
[Check Product to the Right]
Product C => [No Product Error][Shift Error][No Facings Error]
[Possible Facings == Actual Facings of Product C][Slot Shift Left][Shift Product C right]
[Check Product to the Right]
Product D => [No Product Error][Shift Error][No Facings Error]
[Possible Facings == Actual Facings of Product D][Slot Shift Left][Shift Product D right]
[Add Product A] [Create new matrix with A added, adjust parameters, and recheck]
{No Remaining Errors}

Compliance process directs:
Locate Product D (UPC). Shift Product D right to the end of the shelf.
Locate Product C (UPC). Shift Product C right to be adjacent to Product D.
Locate Product B (UPC). Shift Product B right to be adjacent to Product C.
Locate Product A (UPC). Add Product A in the empty slot.

### EXAMPLE 9

The system can detect when a product has been replaced by an unknown product.

| 1 | 2 | 3 | 4 | 5 | 6 | 7 | 8 | 9 | 10 |
|---|---|---|---|---|---|---|---|---|---|
| A | A | A | B | B | E | C | D | D | X |

| | | Errors |
|---|---|---|
| A | [Found] | None |
| B | [Found] | [Less Possible Facings][Less Actual Facings] |
| C | [Found] | None |
| D | [Found] | None |
| E | | [Extra Product] |

Compliance process detects:
Product A => [No Product Error][No Shift Error][No Facings Error]
Product B => [No Product Error][No Shift Error][Facings Error]
[Less Possible Facings == Less Actual Facings][Less Actual Facings] [Add Product B]
[Check Product to the Right]
Product E => [Product Error][No Shift Error][No Facings Error][Remove Product E]
[Check Product to the Right]
Product C => [No Product Error][No Shift Error][No Facings Error]
{No Remaining Errors}

Compliance process directs:
Locate Product E (UPC). Remove Product E.
Locate Product B (UPC). Add Product B in empty slot.

### EXAMPLE 10

The system can detect when a product has too many actual facings.

| 1 | 2 | 3 | 4 | 5 | 6 | 7 | 8 | 9 | 10 |
|---|---|---|---|---|---|---|---|---|---|
| A | A | A | A | B | B | B | C | D | D |

| | | Errors |
|---|---|---|
| A | [Found] | [More Possible Facings][More Actual Facings] |
| B | [Found] | [Slot Shift Right] |
| C | [Found] | [Slot Shift Right] |
| D | [Found] | [Slot Shift Right] |

Compliance process detects:
Product A => [No Product Error][No Shift Error][Facings Error]
[More Possible Facings == More Actual Facings of Product A] [More Actual Facings] [Remove last Product A]
[Check Product to the Right]
[Slot Shift Right][Shift Product B left]
[Check Product to the Right]
[Slot Shift Right][Shift Product C left]
[Check Product to the Right]
[Slot Shift Right][Shift Product D left]
{No Remaining Errors}

Compliance process directs:
Locate Product A (UPC). Remove last slot of Product A.
Locate Product B (UPC). Shift Product B left to be adjacent to Product A.
Locate Product C (UPC). Shift Product C left to be adjacent to Product B.
Locate Product D (UPC). Shift Product D left to be adjacent to Product C.

### EXAMPLE 11

The system can detect when a product has too many actual facings.

| 1 | 2 | 3 | 4 | 5 | 6 | 7 | 8 | 9 | 10 |
|---|---|---|---|---|---|---|---|---|---|
| A | A | A | B | B | B | B | C | D | D |

| | | Errors |
|---|---|---|
| A | [Found] | None |
| B | [Found] | [More Possible Facings][More Actual Facings] |
| C | [Found] | [Slot Shift Right] |
| D | [Found] | [Slot Shift Right] |

Compliance process detects:
Product A => [No Product Error][No Shift Error][No Facings Error]
Product B => [No Product Error][No Shift Error][Facings Error]
[More Possible Facings == More Actual Facings of Product B] [More Actual Facings] [Remove last Product B]
[Check Product to the Right]
[Slot Shift Right][Shift Product C left]
[Check Product to the Right]
[Slot Shift Right][Shift Product D left]
{No Remaining Errors}

Compliance process directs:
Locate Product B (UPC). Remove last slot of Product B.
Locate Product C (UPC). Shift Product C left to be adjacent to Product B.
Locate Product D (UPC). Shift Product D left to be adjacent to Product C.

### SYSTEM

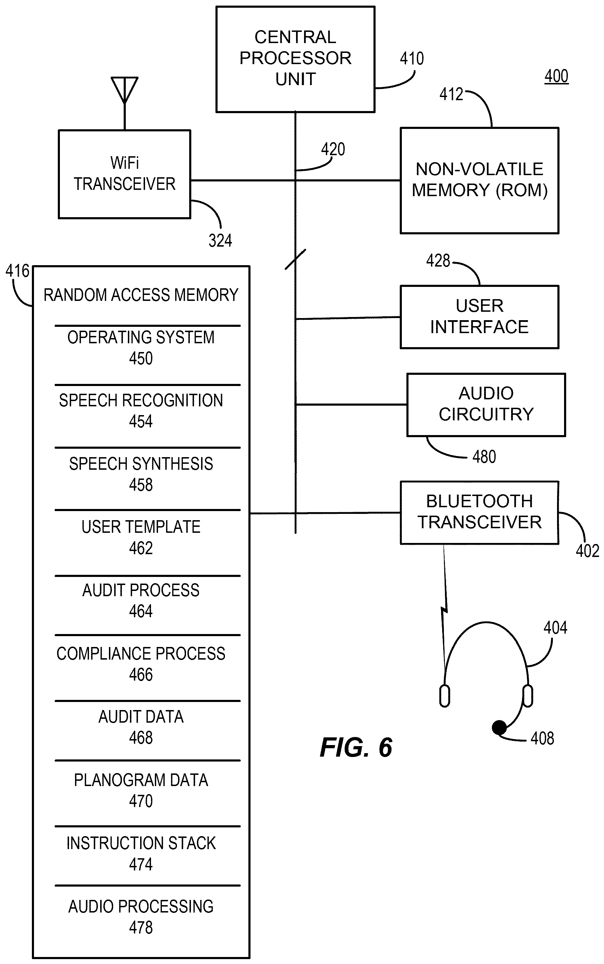

Figure 6 depicts an example of a functional block diagram of an example of a portable wireless terminal 400 that can be used to carry out the processes described. The processing can be carried out in the terminal or in a host computer coupled to the terminal via a wireless connection (for example), or any combination thereof. The terminal 400 is coupled via a Bluetooth transceiver or other wireless or wired transceiver 402 to a paired headset 404 with microphone 408. The terminal 400 includes one or more processor units (e.g., a CPU) 410 having associated non-volatile memory 412 and Random Access Memory (RAM) 316 via one or more bus connections 420. The bus 420 may be further connected to a WiFi transceiver 424 for communication with a wireless network. A user interface 428 is also provided which may include a variety of user controls and displays as is appropriate to the device.

The functions discussed above are carried out by processor 410 (alone or in cooperation with a server or host computer) utilizing programming stored in the memory 412 and 416. In this example, particular functional modules are depicted at RAM 416 that represents various functions discussed. Operating system 450 carries out the functions normally associated with an operating system (e.g., Linux or Android). A speech recognition module 454 can be used to carry out speech processing to convert speech received via the microphone 408 to a message understood by the terminal 400.

The speech synthesis module 458 generates synthesized speech that is conveyed to the user via headset 404 for providing the worker with synthesized speech instructions from the instruction stack. The user template 462 provides information that is used by speech recognition module 454 to improve the accuracy of recognition of speech by a particular user. The audit process described above is stored as instruction at 464 and the compliance "detect and correct" process discussed above is stored as instructions at 466. The output of the audit process 464 is stored as audit data 468 and the planogram data are stored at 470. The instruction stack discussed above is stored as data at 474 for use as described to provide instructions for correction of the display.

The instruction stack can be unwound into instructions that are used to generate synthesized speech directives that are output using audio circuits 480 to ultimately provide the speech directives one by one to the worker via the headset 404. The speech recognition, if used, may be implemented as a hardware module or as a processor utilizing speech recognition processes defined by 454 which may be used to process verbal commands from the worker to acknowledge instructions or to provide input during the audit process, etc. Many variations are possible without departing from the present teachings.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A method, comprising:
storing actual product placement data describing a display arrangement of actual product placements;
at one or more programmed processors:
comparing the actual product placement data with planned product placement as defined in a planogram;
creating a set of one or more instructions for rearrangement of the actual product placement to bring the actual product placement in the display arrangement into compliance with the planned product placement as defined in the planogram; and
outputting the set of instructions.

2. The method according to claim 1, where the set of instructions are stored as ordered instructions in an instruction stack and where outputting the instruction stack comprises outputting the instructions in a specified order.

3. The method according to claim 1, where the set of instructions is output as synthesized speech instructions.

4. The method according to claim 1, where at least one of the instructions comprises an instruction to add product at a specified location in the display arrangement.

5. The method according to claim 1, where at least one of the instructions comprises an instruction to shift a product at a specified location in the display arrangement to the left or to the right.

6. The method according to claim 1, where at least one of the instructions comprises an instruction to remove a product at a specified location in the display arrangement.

7. The method according to claim 1, where the comparing comprises a product check of the audit data to identify unknown or missing products.

8. The method according to claim 1, where the comparing comprises a facings check that compares relative quantities of actual product facings with planned product facings.

9. The method according to claim 1, where the comparing comprises a slot check that checks to see if products are shifted to the left or right of planned product placement.
